(19) **Europäisches Patentamt**
**European Patent Office**
**Office européen des brevets**

(11) **EP 0 882 099 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**08.04.2009 Patentblatt 2009/15**

(45) Hinweis auf die Patenterteilung:
**04.02.2004 Patentblatt 2004/06**

(21) Anmeldenummer: **97944842.0**

(22) Anmeldetag: **06.09.1997**

(51) Int Cl.:
*C09C 1/00* (2006.01)    *C09D 7/12* (2006.01)
*C08K 3/00* (2006.01)    *A61K 8/00* (2006.01)
*C04B 33/14* (2006.01)    *C03C 4/02* (2006.01)
*C09D 11/00* (2006.01)

(86) Internationale Anmeldenummer:
**PCT/EP1997/004850**

(87) Internationale Veröffentlichungsnummer:
**WO 1998/012266 (26.03.1998 Gazette 1998/12)**

(54) **MEHRSCHICHTIGE INTERFERENZPIGMENTE**

MULTILAYERED INTERFERENCE PIGMENTS

PIGMENTS D'INTERFERENCE MULTICOUCHES

(84) Benannte Vertragsstaaten:
**DE ES FI FR GB IT**

(30) Priorität: **21.09.1996 DE 19638708**

(43) Veröffentlichungstag der Anmeldung:
**09.12.1998 Patentblatt 1998/50**

(73) Patentinhaber: **Merck Patent GmbH**
**64293 Darmstadt (DE)**

(72) Erfinder:
- **DIETZ, Johann**
**D-63128 Dietzenbach (DE)**
- **PARUSEL, Manfred**
**D-64839 Münster (DE)**
- **SCHILLING, Matthias**
**D-64665 Alsbach (DE)**
- **AMBROSIUS, Klaus**
**D-64807 Dieburg (DE)**

(56) Entgegenhaltungen:
**EP-A- 0 370 701        EP-A- 0 708 154**
**EP-A- 0 753 545        EP-A1- 0 373 575**
**EP-A1- 0 373 575        WO-A1-94/01498**
**DE-A1- 2 723 871        DE-A1- 19 618 569**
**FR-A- 2 352 867        JP-A- 07 246 366**
**US-A- 3 874 890**

- **DATABASE WPI Week 9547 Derwent Publications Ltd., London, GB; AN 95-363063 XP002051685 & JP 07 246 366 A (MATSUDA) , 26.September 1995 in der Anmeldung erwähnt**
- **'Perlglanzpigmente, Physikalische Grundlagen, Eigenschaften, Anwendugen', MODERNE INDUSTRIE AG & CO., LANDSBERG/LECH Seiten 1-21 U.29 - 41**
- **'Auszug aus "Perlglanzpigmente - Die Technologie des Beschichtens"', 1995, VINCENZ VERLAG, HANNOVER Artikel R. GLAUSCH ET AL**

Bemerkungen:
Die Akte enthält technische Angaben, die nach dem Eingang der Anmeldung eingereicht wurden und die nicht in dieser Patentschrift enthalten sind.

EP 0 882 099 B2

**Beschreibung**

Die Erfindung betrifft mehrschichtige Interferenzpigmente, bestehend aus einem transparenten Trägermaterial, das mit alternierenden Schichten von Metalloxiden mit niedriger und hoher Brechzahl beschichtet ist.

Mehrschichtige Interferenzpigmente mit abwechselnden Schichten aus Materialien mit hoher und niedriger Brechzahl sind bekannt. Sie unterscheiden sich hinsichtlich des Trägermaterials und des Materials für die einzelnen Schichten sowie durch den Herstellungsprozeß. Die Schichten werden entweder durch Auffällen im Naßverfahren oder durch Aufdampfen oder Sputtern im Vakuum hergestellt. Die auf den Träger oder eine "Release-Schicht" aufgebrachten Schichten sind alle optisch aktiv und tragen zur Ausbildung der Interferenzfarben bei. Die Trägermaterialien sind nur in Ausnahmefällen optisch aktiv.

US 4 434 010 beschreibt ein mehrschichtiges Interferenzpigment, bestehend aus einer zentralen Schicht eines reflektierenden Materials (Aluminium) und alternierenden Schichten zweier transparenter, dielektrischer Materialien mit hoher und niedriger Brechzahl, beispielsweise Titandioxid und Siliziumdioxid beiderseits der zentralen Aluminiumschicht. Dieses Pigment wird z. B. für den Druck von Wertpapieren eingesetzt.

JP H7-759 (Kokoku) beschreibt ein mehrschichtiges Interferenzpigment mit metallischem Glanz. Es besteht aus einem Substrat, das mit alternierenden Schichten von Titandioxid und Siliziumdioxid beschichtet ist. Das Substrat wird aus Aluminium-, Gold- oder Silberplättchen oder Plättchen aus Glimmer und Glas, die mit Metallen beschichtet sind, gebildet.

JP H7-246 366 beschreibt ein mehrschichtiges Interferenzpigment mit alternierenden Schichten eines Materials mit hoher Brechzahl und eines Materials mit niedriger Brechzahl. Als Substrat werden Glas und für die Beschichtung Siliciumdioxid und Titandioxid verwendet. Die einzelnen Schichten besitzen eine optische Dicke, die ein ganzzahliges Vielfaches eines Viertels der Wellenlänge ist, bei der Interferenz zu erwarten ist. Daraus ergibt sich für die Titandioxidschichten eine Schichtdicke von 44,4 nm bei einer Brechzahl von 2,7 und für die Siliciumdioxidschichten eine Schichtdicke von 80 nm bei einer Brechzahl von 1,5.

Bei den oben beschriebenen Pigmenten wirken die Siliciumdioxidschichten als optisch aktive Schichten. Diese optisch aktive Wirkung setzt mit einer Schichtdicke von etwa 20 nm ein. Siliciumdioxidschichten werden aber auch als Diffusionssperren bei leitfähigen Pigmenten eingesetzt. So beschreibt EP 0 373 575 leitfähige plättchenförmige Pigmente, die aus einem plättchenförmigen Metalloxid oder aus einem mit einem Metalloxid beschichteten plättchenförmigen Material und einer leitfähigen Schicht bestehen, wobei zwischen Metalloxidschicht und leitfähiger Schicht eine Siliciumdioxidschicht angeordnet ist, die verhindert, daß während des Kalzinierens Ionen aus dem Substrat oder der Metalloxidschicht in die leitfähige Schicht diffundieren, weil sonst die Leitfähigkeit der antimondotierten Zinnoxidschicht herabgesetzt wird. Die Dicke der Siliciumdioxidzwischenschicht liegt zwischen 8 und 30 nm bei Konzentrationen von 5 bis 20 Gew.-% $SiO_2$ bezogen auf das Substrat.

In FR 2 352 867 wird ein Glimmerpigment beschrieben, welches auf seiner Oberfläche eine dünne Schicht eines farblosen Oxids, das aus Titandioxid oder Aluminiumoxid ausgewählt ist, und darauf eine Schicht aus einem Gemisch von $\alpha$-FeOOH und $\delta$-FeOOH aufweist, wobei das farblose Oxid in einer Schichtdicke von 2 bis 21 nm aufgebracht ist.

Überraschenderweise wurde festgestellt, daß die Qualität handelsüblicher Interferenzpigmente hinsichtlich ihrer mechanischen Eigenschaften deutlich verbessert werden kann, wenn man in den Metalloxidschichten mit hoher Brechzahl mindestens eine Zwischenschicht aus einem anderen Metalloxid anordnet, die keine optische Aktivität besitzt.

Geeigneten Metalloxiden ist gemeinsam, daß sie trotz ihrer geringen Dicke auch nach dem Kalzinieren des Pigmentes noch als Schicht erhalten sind, da sie mit den umgebenden hochbrechenden Metalloxiden nur schwierig Mischphasen bilden. Sie besitzen zudem eine deutlich geringere Brechzahl als die die optische Schicht bildenden Metalloxide.

Gegenstand der Erfindung sind somit mehrschichtige Interferenzpigmente gemäß Anspruch 1.

Zur Herstellung der erfindungsgemäßen Pigmente wird das transparente Trägermaterial in Wasser suspendiert und abwechselnd mit einem Metalloxidhydrat mit hoher Brechzahl und einem Metalloxidhydrat mit niedriger Brechzahl durch Zugabe und Hydrolyse der entsprechenden wasserlöslichen Metallverbindungen beschichtet, wobei durch gleichzeitige Zugabe von Säure oder Base der für die Fällung des jeweiligen Metalloxidhydrates notwendige pH-Wert eingestellt und konstant gehalten wird und anschließend das beschichtete Trägermaterial aus der wäßrigen Suspension abgetrennt, getrocknet und gegebenenfalls kalziniert wird.

Gegenstand der Erfindung ist außerdem die Verwendung der erfindungsgemäßen Pigmente zur Pigmentierung von Lacken, Druckfarben, Kunststoffen, Glasuren für Keramiken und Gläser sowie Kosmetika.

Hierfür können sie als Mischungen mit handelsüblichen Pigmenten, beispielsweise anorganischen oder organischen Absorptionspigmenten, Metalleffektpigmenten und LCP-Pigmenten, eingesetzt werden.

Das Trägermaterial ist z. B. Glimmer, ein anderes Schichtsilikat, Glasplättchen oder plättchenförmiges Siliziumdioxid, das nach dem in WO 93/08237 beschriebenen Verfahren auf einem endlosen Band durch Verfestigung und Hydrolyse einer Wasserglaslösung hergestellt wird.

Bei dem Metalloxid mit hoher Brechzahl handelt es sich um ein Oxid oder Mischungen von Oxiden mit oder ohne absorbierende Eigenschaften, wie z.B. $TiO_2$, $ZrO_2$, $Fe_2O_3$, $Fe_3O_4$, $Cr_2O_3$ oder ZnO.

Das Metalloxid mit niedriger Brechzahl ist z. B. $SiO_2$, $Al_2O_3$, AlOOH, $B_2O_3$ oder eine Mischung daraus und kann ebenfalls absorbierende oder nicht absorbierende Eigenschaften haben. Gegebenenfalls kann die Oxidschicht mit niedriger Brechzahl Alkali- und Erdalkalioxide als Bestandteile enthalten.

Die Metalloxidschichten werden vorzugsweise naßchemisch aufgebracht, wobei die zur Herstellung von Perlglanzigmenten entwickelten naßchemischen Beschichtungsverfahren angewendet werden können; derartige Verfahren sind z.B. beschrieben in DE 14 67 468, DE 19 59 988. DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren Patentdokumenten und sonstigen Publikationen.

Zur Beschichtung werden die Substratpartikel in Wasser suspendiert und mit einem oder mehreren hydrolysierbaren Metallsalzen bei einem für die Hydrolyse geeigneten pH-Wert versetzt, der so gewählt wird, daß die Metalloxide bzw. Metalloxidhydrate direkt auf den Partikeln niedergeschlagen werden, ohne daß es zu Nebenfäliungen kommt. Der pH-Wert wird üblicherweise durch gleichzeitiges Zudosieren einer Base oder Lauge konstant gehalten. Anschließend werden die Pigmente abgetrennt, gewaschen und getrocknet und gegebenenfalls geglüht, wobei die Glühtemperatur im Hinblick auf die jeweils vorliegende Beschichtung optimiert werden kann. Falls gewünscht, können die Pigmente nach Aufbringen einzelner Beschichtungen abgetrennt, getrocknet und gegebenenfalls geglüht werden, um dann zur Auffällung der weiteren Schichten wieder resuspendiert zu werden. Letzteres Verfahren ist aber in der Regel unökonomisch.

Als Metalloxid mit hoher Brechzahl wird bevorzugt Titandioxid und als Metalloxid mit niedriger Brechzahl Siliziumdioxid verwendet.

Für das Aufbringen der Titandioxidschichten wird das im US 3 553 001 beschriebene Verfahren bevorzugt.

Zu einer auf etwa 50-100 °C, insbesondere 70-80 °C erhitzten Suspension des zu beschichtenden Materials wird langsam eine wäßrige Titansalzlösung zugegeben, und es wird durch gleichzeitiges Zudosieren einer Base, wie z.B. wäßrige Ammoniaklösung oder wäßrige Alkalilauge, ein weitgehend konstanter pH-Wert von etwa 0,5 - 5, insbesondere etwa 1,5 - 2,5 eingehalten. Sobald die gewünschte Schichtdicke der $TiO_2$-Fällung erreicht ist, wird die Zugabe der Titansalzlösung und der Base gestoppt.

Dieses, auch als Titrationsverfahren bezeichnete Verfahren zeichnet sich dadurch aus, daß ein Überschuß an Titansalz vermieden wird. Das wird dadurch erreicht, daß man pro Zeiteinheit nur eine solche Menge der Hydrolyse zuführt, wie sie für eine gleichmäßige Beschichtung mit dem hydratisierten $TiO_2$ erforderlich ist und wie pro Zeiteinheit von der verfügbaren Oberfläche der zu beschichtenden Teilchen aufgenommen werden kann. Es entstehen deshalb keine hydratisierten Titandioxidteilchen, die nicht auf der zu beschichtenden Oberfläche niedergeschlagen sind.

Für das Aufbringen der Siliziumdioxidschichten ist folgendes Verfahren anzuwenden: Zu einer auf etwa 50 - 100 °C, insbesondere 70 - 80 °C erhitzten Suspension des zu beschichtenden Materials wird eine Natronwasserglaslösung zudosiert. Durch gleichzeitige Zugabe von 10%iger Salzsäure wird der pH-Wert bei 1,5 bis 10, vorzugsweise bei 6,5 bis 8,5 konstant gehalten. Nach Zugabe der Wasserglaslösung wird noch 30 min nachgerührt.

Es ist zusätzlich möglich, die Pulverfarbe des Pigmentes durch Aufbringen weiterer Schichten zu verändern, wie z.B. farbige Metalloxide oder Berliner Blau, Verbindungen der Übergangsmetalle, wie z.B. Fe, Cu, Ni,Co, Cr oder organische Verbindungen, wie Farbstoffe oder Farblacke.

Es ist weiterhin möglich, das fertige Pigment einer Nachbeschichtung oder Nachbehandlung zu unterziehen, die die Licht-, Wetter- und chemische Stabilität weiter erhöht, oder die Handhabung des Pigments, insbesondere die Einarbeitung in unterschiedliche Medien, erleichtert. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage.

Die zusätzlich aufgebrachten Stoffe machen nur etwa 0,1 bis 5 Gew.-%, vorzugsweise etwa 0,5 bis 3 Gew.-%, des gesamten Pigmentes aus.

Bevorzugt ist auch eine zusätzliche Beschichtung mit Komplexsalzpigmenten, insbesondere Cyanoferratkomplexen, wie zum Beispiel Berliner Blau und Turnbulls Blau, wie sie in EP 0 1412 173 und DE 23 13 332 beschrieben ist.

Das erfindungsgemäße Pigment kann auch mit organischen Farbstoffen und insbesondere mit Phthalocyanin- oder Metallphthalocyanin- und/oder Indanthrenfarbstoffen nach DE 4009 567 beschichtet werden. Dazu wird eine Suspension des Pigmentes in einer Lösung des Farbstoffes hergestellt und diese dann mit einem Lösungsmittel zusammengebracht, in welchem der Farbstoff schwer löslich oder unlöslich ist.

Die Dicke der Zwischenschichten aus Metalloxiden mit niedriger Brechzahl innerhalb einer Metalloxidschicht mit hoher Brechzahl beträgt 1 bis 20 nm, vorzugsweise 2 bis 10 nm. Innerhalb dieses Bereiches ist eine Metalloxidschicht mit niedriger Brechzahl, beispielsweise Siliciumdioxid, optisch inaktiv, was ein wesentliches Merkmal der vorliegenden Erfindung ist.

Die Dicke der Schichten aus Metalloxiden mit hoher Brechzahl liegt zwischen 20 und 350 nm, vorzugsweise zwischen 40 und 260 nm. Da die Zwischenschichten aus niedrigbrechenden Metalloxiden die mechanische Stabilität der Schichten aus hochbrechenden Metalloxiden stark erhöhen, sind auch stärkere Schichten mit ausreichender Stabilität herstellbar. Praktisch werden aber nur Schichtdicken bis 260 nm angewendet, was bei einem Titandioxid-Glimmerpigment Grün III. Ordnung entspricht.

Die Anzahl und Lage der Zwischenschichten ist abhängig von der Gesamt-Schichtdicke der Metalloxidschicht mit hoher Brechzahl. Bevorzugt werden die Zwischenschichten so angeordnet, daß die Schichtdicke der Metalloxidteilschichten mit hoher Brechzahl der optischen Dicke oder einem ganzzahligen Vielfachen dieser optischen Dicke entsprechen, die für die jeweilige Interferenzfarbe notwendig ist. Beispielsweise würden bei einem Grün III. Ordnung die Zwischenschichten so angeordnet, daß sich eine Schicht bei Grün I. Ordnung und eine zweite Schicht bei Grün II. Ordnung befindet. Dieses Aussage gilt für reine Interferenzfarben. In einem anderen Falle kann der Fachmann die optimale Lage der Zwischenschichten ohne erfinderisches Zutun ermitteln. Beispielsweise erhält man ein gelberes Grün III. Ordnung, wenn man eine Zwischenschicht auf Gold II. Ordnung legt, verglichen mit einem reinen Grün III. Ordnung, bei dem die Zwischenschicht auf einem Grün II. Ordnung angeordnet ist.

Beispiel

100 g Kaliglimmer (10-60 $\mu$m) werden in 2 l vollentsalztem Wasser suspendiert. Die auf 75 °C erhitzte Suspension wird mit verdünnter Salzsäure auf pH 1,8 eingestellt und zunächst durch Zugabe von 3,3 ml/min $SnCl_4$ -Lösung (aus 2,2 g $SnCl_4$ und 0,75 g konz. Salzsäure in 100 ml vollentsalztem Wasser) mit $SnO_2$ beschichtet. Der pH-Wert wird mit 32%iger Natronlauge konstant gehalten.

Es wird 15 min nachrühren gelassen und anschließend unter den gleichen pH/T-Bedingungen mit $TiO_2$ beschichtet durch Zugabe von 1,5 ml/min $TiCl_4$-Lösung (400 g $TiCl_4$/l) und Konstanthalten des pH-Wertes mit 32%iger Natronlauge. Nach Erreichen des Farbendpunktes Grün II. Ordnung wird die Belegung unterbrochen, 15 min nachgerührt und nach Einstellung von pH 8,0 mit verdünnter Natronlauge (innerhalb ca. 15 min) weitere 10 min nachgerührt.

Nun erfolgt die Beschichtung mit $SiO_2$ durch Zugabe von 3 ml/min Natronwasserglaslösung (aus 7,3 g Natronwasserglas mit 27 % $SiO_2$ und 80 ml vollentsalztem Wasser) ohne pH-Kompensation. Nach Beendigung wird 15 min nachrühren gelassen, mit verdünnter Salzsäure (innerhalb ca. 10 min) erneut pH 1,8 eingestellt und durch Zugabe von $TiCl_4$-Lösung eine zweite $TiO_2$-Schicht, wie oben beschrieben, aufgebracht. Nach Erreichen des Vergleichsendpunktes Grün III. Ordnung wird abgebrochen, 15 min nachgerührt und anschließend das Pigment abgesaugt, gewaschen, getrocknet und 30 min bei 850 °C geglüht.

Das erhaltene Pigment besitzt eine intensiv grüne Interferenzfabe. Die Aufteilung der $TiO_2$-Schichten ist wie folgt:

| | |
|---|---|
| 1. Schicht | ca. 170 nm |
| 2. Schicht | ca. 85 nm |
| Gesamtschicht | ca. 260 nm. |

Die Dicke der $SiO_2$-Zwischenschicht beträgt ca. 5 nm.

Vergleichsbeispiel

100 g Kaliglimmer (10-60 $\mu$m) werden in 2 l vollentsalztem Wasser suspendiert. Die auf 75 °C erhitzte Suspension wird mit verdünnter Salzsäure auf pH 1,8 eingestellt und zunächst durch Zugabe von 3,3 ml/min $SnCl_4$-Lösung (aus 2,2 g $SnCl_4$ und 0,75 g konz. Salzsäure in 100 ml vollentsalztem Wasser) mit $SnO_2$ beschichtet. Der pH-Wert wird mit 32%iger Natronlauge konstant gehalten.

Es wird 15 min nachrühren gelassen und anschließend unter den gleichen pH/T-Bedingungen mit $TiO_2$ beschichtet durch Zugabe von 1,5 ml/min $TiCl_4$-Lösung (400 g $TiCl_4$/l) und Konstanthalten des pH-Wertes mit 32%iger Natronlauge. Nach Erreichen des Farbendpunktes Grün III. Ordnung wird die Belegung abgebrochen, 15 min nachgerührt und anschließend das Pigment abgesaugt, gewaschen, getrocknet und 30 min bei 850 °C geglüht. Die Dicke der $TiO_2$-Schicht beträgt ca. 255 nm. Das erhaltene Pigment ist deutlich schwächer in der interferenzfarbstärke als das erfindungsgemäß hergestellte. Die Plättchen zeigen starke Risse und Abplatzungen in der $TiO_2$-Schicht. Koloristik der erhaltenen Pigmente (Hunter - L, a b) anhand von Nitrocellulose-Lackkarten

Die Herstellung der NC-Lackkarten erfolgt derart, daß 0,9 g Pigment in 54,5 g NC-Lack sorgfältig dispergiert werden und nach dem Entgasen die Mischung mit Hilfe einer Rakel auf Karton mit halbseitig schwarzem bzw. weißem Untergrund aufgebracht wird. Die Naßfilmstärke beträgt 500 $\mu$m. Nach dem Trocken werden die koloristischen Daten unter den angegebenen Geometrien vermessen.

| Geometrie | | | | | | | | | |
|---|---|---|---|---|---|---|---|---|---|
| | 45°/0° Schwarzkarte | | | 22,5°/22,5° Schwarzkarte | | | 45°/0° Schwarzkarte | | |
| | L | a | b | L | a | b | L | a | b |
| Beispiel | 28,6 | -6,4 | -4,0 | 63,5 | -28.3 | +5,7 | 83,0 | +11,5 | -0,8 |
| Vergleichsbeispiel | 28,4 | -5,3 | -3,7 | 55,9 | -21.3 | +5,9 | 85,4 | +7,9 | +0,8 |

Die Vorteile des erfindungsgemäßen Pigments gegenüber dem Vergleichsbeispiel sind leicht ersichtlich:

Farbstärke, repräsentiert durch den negativen a-Wert Glanz
(22,5°/22,5°) :
28,3 gegenüber 21,3

Helligkeit, repräsentiert durch den C-Wert Glanz
(22,5°/22,5°) :
63,5 gegenüber 55,9

Glanz, repräsentiert durch die "Glanzzahl"

$$\left( \frac{L_{22,5°/22,5°} - L_{45°/0°}}{L_{22,5°/22,5°}} \right):$$

55,0 gegenüber 49,2

## Patentansprüche

1. Mehrschichtige Interferenzpigmente, bestehend aus einem transparenten Trägermaterial, welches mit einer Metalloxidschicht aus einem Metalloxid hoher Brechzahl, ausgewählt aus $TiO_2$, $ZrO_2$, $Fe_2O_3$, $Fe_3O_4$, $Cr_2O_3$, ZnO oder Mischungen dieser Oxide beschichtet ist, in welcher eine oder mehrere Zwischenschichten aus einem Metalloxid mit niedriger Brechzahl, ausgewählt aus $SiO_2$, $Al_2O_3$, AlOOH, $B_2O_3$ oder einer Mischung daraus, vorliegen, wobei die Dicke der Zwischenschichten aus Metalloxiden mit niedriger Brechzahl 1 bis 20 nm beträgt und die Zwischenschichten optisch inaktiv sind, und wobei die Pulverfarbe des Pigmentes durch Aufbringen weiterer Schichten verändert werden kann und das farbige Pigment einer Nachbeschichtung oder Nachbehandlung unterzogen werden kann, die die Licht-, Wetter- und chemische Stabilität weiter erhöht oder die Handhabung des Pigments, insbesondere die Einarbeitung in unterschiedliche Medien erleichtert.

2. Interferenzpigmente nach Anspruch 1, wobei die Dicke der Zwischenschichten aus Metalloxiden mit niedriger Brechzahl 2 bis 10 nm beträgt.

3. Interferenzpigmente nach Anspruch 1, wobei die Metalloxidschicht aus Metalloxiden hoher Brechzahl aus zwei oder mehreren Metalloxidteilschichten mit hoher Brechzahl zusammengesetzt ist, deren Schichtdicke der optischen Schichtdicke entspricht, die für die gewünschte Interferenzfarbe I. Ordnung notwendig ist oder ein ganzzahliges Vielfaches davon ist.

4. Interferenzpigmente nach Anspruch 3, wobei die Schichtdicke der Metalloxidteilschichten mit hoher Brechzahl der Dicke von Schichten gleicher Interferenzfarbe 1. Ordnung oder der Dicke von Schichten gleicher Interferenzfarbe 1. und 2. Ordnung entspricht.

5. Verwendung der Pigmente nach den Ansprüchen 1 bis 4 zur Pigmentierung von Lacken, Druckfarben, Kunststoffen, Kosmetika, und Glasuren für Keramiken und Gläser.

**6.** Verwendung nach Anspruch 5, wobei die Pigmente als Mischungen mit handelsüblichen Pigmenten eingesetzt werden.

**7.** Lacke, Druckfarben, Kunststoffe, Kosmetika, Glasuren für Keramiken und Gläser, welche mit einem Pigment nach den Ansprüchen 1 bis 4 pigmentiert sind.


**Claims**

**1.** Multilayered interference pigments consisting of a transparent support material which is coated with a metal-oxide layer being of a metal oxide of high refractive index selected from $TiO_2$, $ZrO_2$, $Fe_2O_3$, $Fe_3O_4$, $Cr_2O_3$, ZnO or mixtures of these oxides, in which one or more interlayers being of a metal oxide of low refractive index selected from $SiO_2$, $Al_2O_3$, AlOOH, $B_2O_3$ or a mixture thereof are present, where the thickness of the interlayers being of metal oxides of low refractive index is 1 to 20 nm and the interlayers are optically inactive, and where the powder colour of the pigment can be changed through application of further layers and the finished pigment can be subjected to post-coating or post-treatment which further increases the light, weather and chemical stability or simplifies handling of the pigment, in particular incorporation into various media.

**2.** Interference pigments according to Claim 1, where the thickness of the interlayers being of metal oxides of low refractive index is 2 to 10 nm.

**3.** Interference pigments according to Claim 1, where the metal-oxide layer being of metal oxides of high refractive index is composed of two or more metal-oxide part-layers of high refractive index whose layer thickness corresponds to the optical layer thickness which is necessary for the desired 1 st order interference colour or is an integer multiple thereof.

**4.** Interference pigments according to Claim 3, where the layer thickness of the metal-oxide part-layers of high refractive index corresponds to the thickness of layers of the same 1 st order interference colour or the thickness of layers of the same 1 st and 2nd order interference colour.

**5.** Use of the pigments according to Claims 1 to 4 for pigmenting coatings, printing inks, plastics, cosmetics, and glazes for ceramics and glasses.

**6.** Use according to Claim 5, where the pigments are employed as mixtures with commercially available pigments.

**7.** Coatings, printing inks, plastics, cosmetics, glazes for ceramics and glasses which are pigmented with a pigment according to Claims 1 to 4.


**Revendications**

**1.** Pigments d'interférence multicouches constitués d'un matériau support transparent qui est revêtu d'une couche d'oxyde métallique se composant d'un oxyde métallique à indice de réfraction élevé choisi parmi $TiO_2$, $ZrO_2$, $Fe_2O_3$, $Fe_3O_4$, $Cr_2O_3$, ZnO ou des mélanges de ces oxydes, dans lesquels une ou plusieurs inter-couches se composant d'un oxyde métallique à indice de réfraction faible choisi parmi $SiO_2$, $Al_2O_3$, AlOOH, $B_2O_3$ ou un mélange de ceux-ci sont présentes, dans lesquels l'épaisseur des inter-couches se composant des oxydes métalliques à indice de réfraction faible est de 1 à 20 nm et les inter-couches sont optiquement inactives, et dans lesquels la couleur pulvérulente du pigment peut être changée par l'intermédiaire d'une application de couches supplémentaires et le pigment fini peut être soumis à un post-revêtement ou un post-traitement qui augmente encore la stabilité vis-à-vis de la lumière, les intempéries et les actions chimiques ou qui simplifie la manipulation du pigment, en particulier l'incorporation dans divers supports.

**2.** Pigments d'interférence selon la revendication 1, dans lesquels l'épaisseur des inter-couches se composant des oxydes métalliques à indice de réfraction faible est de 2 to 10 nm.

**3.** Pigments d'interférence selon la revendication 1, dans lesquels la couche d'oxyde métallique se composant des oxydes métalliques à indice de réfraction élevé est composée de deux ou plus de deux couches partielles d'oxyde métallique à indice de réfraction élevé dont l'épaisseur de couche correspond à l'épaisseur de couche optique qui est nécessaire pour la couleur d'interférence de premier ordre souhaitée ou qui est un multiple de celle-ci.

4. Pigments d'interférence selon la revendication 3, dans lesquels l'épaisseur de couche des couches partielles d'oxyde métallique à indice de réfraction élevé correspond à l'épaisseur des couches de la même couleur d'interférence de premier ordre ou à l'épaisseur des couches de la même couleur d'interférence de premier et second ordre.

5. Utilisation des pigments selon les revendications 1 à 4 pour pigmenter des revêtements, des encres d'impression, des plastiques, des cosmétiques et des glaçures pour céramiques et verres.

6. Utilisation selon la revendication 5, dans laquelle les pigments sont employés en tant que mélanges avec des pigments disponibles commercialement.

7. Revêtements, encres d'impression, plastiques, cosmétiques et glaçures pour céramiques et verres qui sont pigmentés avec un pigment selon les revendications 1 à 4.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4434010 A
- JP H7759 A
- JP H7246366 B
- EP 0373575 A
- FR 2352867
- WO 9308237 A
- DE 1467468
- DE 1959988
- DE 2009566
- DE 2214545
- DE 2215191
- DE 2244298
- DE 2313331
- DE 2522572
- DE 3137808
- DE 3137809
- DE 3151343
- DE 3151354
- DE 3151355
- DE 3211602
- DE 3235017
- US 3553001 A
- DE 2215191 C
- DE 3151354 A
- DE 3235017 A
- DE 3334598 A
- EP 01412173 A
- DE 2313332
- DE 4009567